# EUROPÄISCHE PATENTSCHRIFT

(11) **EP 1 314 216 B1**
(45) Veröffentlichungstag und Bekanntmachung des Hinweises auf die Patenterteilung: **17.02.2010**
(21) Anmeldenummer: 01969462.9
(22) Anmeldetag: 19.07.2001
(51) Int. Cl.: H01M 8/00

(54) **BRENNSTOFFZELLENSTAPEL MIT INTERNEN GASANSCHLÜSSEN**
FUEL CELL STACK WITH INTERNAL GAS CONNECTIONS
EMPILEMENT DE CELLULES ELECTROCHIMIQUES A RACCORDEMENTS DE GAZ INTERNES

(30) Priorität: 10.08.2000 DE 10039024
(43) Veröffentlichungstag der Anmeldung: 28.05.2003
(73) Patentinhaber: Forschungszentrum Jülich GmbH, 52425 Jülich (DE)
(72) Erfinder: RINGEL, Helmut, Dr., 52382 Niederzier (DE)
(74) Vertreter: Gille Hrabal Struck Neidlein Prop Roos
(86) Internationale Anmeldenummer: PCT/EP2001/008438
(87) Internationale Veröffentlichungsnummer: WO 2002/013299

(56) Entgegenhaltungen:
- DE-A- 4 334 438
- DE-A- 19 650 704
- US-A- 4 997 726
- US-A- 5 399 442
- PATENT ABSTRACTS OF JAPAN vol. 1996, no. 01, 31. Januar 1996 (1996-01-31) -& JP 07 245115 A (MURATA MFG CO LTD), 19. September 1995 (1995-09-19)
- PATENT ABSTRACTS OF JAPAN vol. 2000, no. 05, 14. September 2000 (2000-09-14) -& JP 2000 048831 A (TOKYO GAS CO LTD), 18. Februar 2000 (2000-02-18)
- PATENT ABSTRACTS OF JAPAN vol. 1996, no. 05, 31. Mai 1996 (1996-05-31) -& JP 08 007902 A (HITACHI ZOSEN CORP), 12. Januar 1996 (1996-01-12)
- PATENT ABSTRACTS OF JAPAN vol. 017, no. 578 (E-1450), 20. Oktober 1993 (1993-10-20) -& JP 05 174844 A (TONEN CORP;OTHERS: 01), 13. Juli 1993 (1993-07-13)

## Beschreibung

Die Erfindung betrifft einen Brennstoffzellenstapel. Jede Brennstoffzelle weist eine Elektrolytschicht auf, an die eine Anode sowie eine Kathode angrenzt. Die Brennstoffzellen sind durch bipolare Platten mechanisch und elektrisch verbunden. Eine bipolare Platte schließt mit einer angrenzenden Elektrode einen Elektrodenraum ein. Handelt es sich bei der Elektrode um eine Anode, so wird der Raum Anodenraum genannt. Entsprechend wird der Raum, der an die Kathode angrenzt, Kathodenraum genannt. Jeder Elektrodenraum weist Öffnungen auf, die der Zuführung oder der Abführung eines Betriebsmittels dienen.

In jeden Elektrodenraum wird ein Betriebsmittel während des Betriebes der Brennstoffzelle eingeleitet. Bei dem Betriebsmittel handelt es sich entweder um einen Brennstoff wie z.B. Wasserstoff oder um ein Oxidationsmittel, also z.B. Sauerstoff oder Luft. Ionen eines Betriebsmittels, also entweder Sauerstoffionen oder Wasserstoffionen durchdringen die Elektrolytschicht. Anschließend verbindet sich der Wasserstoff mit dem Sauerstoff zu Wasser unter Freisetzung von Strom.

Ein wesentliches Problem bei einem Brennstoffzellenstapel stellt die Gasdichteabtrennung des Kathodenraums von dem Anodenraum dar. Würde ein Betriebsmittel vom Anodenraum direkt in den Kathodenraum gelangen können (oder umgekehrt), so wäre eine Knallgasreaktion die Folge.

Das Dichtigkeitsproblem ist bei sogenannten Hochtemperatur-Brennstoffzellen besonders gravierend, da neben der Temperaturbelastung durch das Aufheizen und Abkühlen der Brennstoffzellen thermische Spannungen auftreten.

Aus der Druckschrift DE 40 09 138 A1 geht ein Brennstoffzellenstapel der eingangs genannten Art hervor. In die bipolaren Platten sind eine Mehrzahl von Ausnehmungen eingearbeitet, die so aufeinander abgestimmt sind, daß hierdurch Zuführ- bzw. Abführkanäle für Betriebsmittel gebildet werden.

Es ist ein Brennstoffzellenstapel bekannt, bei dem wenigstens eine Elektrode so dick ist, daß diese selbsttragend ist. Unter selbsttragend wird verstanden, daß eine solche Elektrode seine Gestalt im wesentlichen beibehält, wenn die Elektrode in horizontaler Lage an einer Ecke oder einem Rand angefaßt und hochgehoben wird. Der Teil der Elektrode, der nicht angefaßt worden ist, verbiegt sich also nicht schwerkraftbedingt.

Eine solche selbsttragende Elektrode kann z.B. 1,5 mm dick sein. Um Material einzusparen und um die Funktionstüchtigkeit der Elektrode während des Betriebes sicherzustellen, sollte die Elektrode möglichst dünn sein. Aus diesen Anforderungen ergibt sich nach dem heutigen Stand der Technik, daß eine Elektrode für Hochtemperatur-Brennstoffzellen wenigstens 0,5 mm dick sein muß.

Das Vorsehen einer selbsttragenden Elektrode ermöglicht es, eine sehr dünne Elektrolytschicht auf der Elektrode aufzutragen. Eine dünne Elektrolytschicht ist erwünscht, da diese dann schnell und umfangreich von den Ionen eines Betriebsmittels durchdrungen werden kann. Die Leistungsfähiglceit einer Brennstoffzelle ist um so größer, je mehr Ionen die Elektrolytschicht passieren können.

Das Dichtigkeitsproblem bei einem Brennstoffzellenstapel ist bei solchen Brennstoffzellen besonders groß, die aufgrund des vorgenannten Konzeptes über eine beträchtliche Gesamtdicke verfügen.

Es ist bekannt, für Brennstoffzellen mit selbsttragenden Elektroden Kanäle bereitzustellen, von denen aus das Betriebsmittel in die einzelnen Elektrodenräume eines Brennstoffzellenstapel gelangt. Im Unterschied zum Stand der Technik, der aus der Druckschrift DE 40 09 138 A1 bekannt ist, werden diese Kanäle durch separate Bauelemente gebildet. Hierunter ist zu verstehen, daß Ausnehmungen zur Bildung von Kanälen gemäß der Druckschrift DE 40 09 138 A1 bei Brennstoffzellen mit selbsttragenden Elektroden nicht vorgesehen sind.

Das Vorsehen von separaten Bautelementen erhöht das Problem der Gasdichtigkeit, da hier ein zusätzliches Bauteil abgedichtet werden muß, welches unter Umständen aus einem weiteren Material, abweichend von den bereits benutzten, besteht. Zusätzliche thermische Spannungen können die Folge sein.

Aufgabe der Erfindung ist die Schaffung eines Brennstoffzellenstapels der eingangs genannten Art, bei dem die Dichtigkeit in verbesserter Weise sichergestellt wird.

Die Aufgabe der Erfindung wird durch einen Brennstoffzellenstapel mit den Merkmalen des ersten Anspruchs gelöst. Vorteilhafte Ausgestaltungen ergeben sich aus den Unteransprüchen.

Der anspruchsgemäße Brennstoffzellenstapel umfaßt eine Mehrzahl von plattenförmigen Brennstoffzellen, die mit bipolaren Platten mechanisch und elektrisch verbunden sind. Jede Brerinstoffzelle umfaßt eine Kathode, eine Anode und eine zwischen Kathode und Anode liegende Elektrolytschicht. An jede Kathode grenzt ein Kathodenraum und an jede Anode grenzt ein Anodenraum. Die bipolaren Platten weisen erste Ausnehmungen auf, mittels denen Kanäle für das Zuführen von Betriebsmitteln zu den Brennstoffzellen oder für das Abführen von abgereicherten Betriebsmitteln bereitgestellt werden. Solche ersten Ausnehmungen sind aus der Druckschrift DE 40 09 138 A1 bereits bekannt. Darüber hinaus weisen die bipolaren Platten zusätzliche Ausnehmungen auf, in denen sich Brennstoffzellen befinden. Die Abmessungen dieser zusätzlichen bzw. weiteren Ausnehmungen sind im wesentlichen an die Abmessungen der Brennstoffzelle angepaßt. Befindet sich die Brennstoffzelle in der Ausnehmung, so ist diese dann im wesentlichen nur noch von einer Seite aus offen zugänglich. Diese offen zugängliche Seite bzw. Oberfläche wird im wesentlichen durch eine Elektrode der Brennstoffzelle gebildet. Dichtungsmaterial befindet sich schichtförmig oberhalb der weiteren Ausnehmung, so daß zumindest ein Teil des Randes der in der Ausnehmung befindlichen Brennstoffzelle von dem Dichtungsmaterial bedeckt wird. Es genügt, wenn weniger als 1 mm dieser Oberfläche der Brennstoffzelle am Rand bedeckt wird. Darüber hinaus befindet sich diese Dichtungsmaterial schichtförmig auf der angrenzenden Oberfläche der bipolaren Platte derart, daß im erwünschten Umfang abgedichtet wird. Bei der Abdichtung ist darauf zu achten, daß einerseits die verschiedenen Ausnehmungen, die die Zufuhr- bzw. Abfuhrkanäle bilden, geeignet gasdicht verbunden werden. Darüber hinaus ist insbesondere darauf zu achten, daß ein Kathodenraum einer Brennstoffzelle gasdicht vom Anodenraum dieser Brennstoffzelle abgetrennt sind. Durch das Vorsehen der Ausnehmung und das Erstrecken des Dichtungsmaterials bis über Ränder der Brennstoffzelle gelingt eine besonders zuverlässige Abdichtung. Thermische Spannungen aufgrund von unterschiedlichen Materialien machen sich praktisch nicht mehr bemerkbar, da das Dichtungsmaterial sich überwiegend zwischen zwei bipolaren Platten befindet, die naturgemäß den identischen Ausdehnungskoeffizienten aufweisen. Die abweichenden Ausdehnungskoeffizienten bei der Brennstoffzelle fallen praktisch nicht mehr ins Gewicht, da hier die Abdichtung durch einen geringfügigen Überlapp gelingt. Dichtungsmaterial kontaktiert nicht großflächig die Brennstoffzelle, was bei unterschiedlichen thermischen Ausdehnungskoeffizienten besonders problematisch wäre.

Darüber hinaus ist der vorgenannte Aufbau einfach zu fertigen, so daß auch von dieser Seite her die anspruchsgemäße Vorrichtung keine Probleme bereitet.

Die vorgenannten Dichtigkeitsvorteile lassen sich insbesondere bei solchen Brennstoffzellenstapeln erzielen, bei denen Brennstoffzellen mit wenigstens einer selbsttragenden Elektrode eingesetzt werden. Eine solche selbsttragende Elektrode weist regelmäßig eine Dicke von wenigstens 0,5 mm auf. Eine Dicke von 1,5 mm sollte die Elektrode nicht überschreiten, unter anderem um den Materialaufwand nicht zu groß werden zu lassen. Eine typische Dicke kann z.B. 1 mm betragen.

In der Praxis hat es sich bewährt, die Anode als selbsttragende Elektrode vorzusehen.

Die Vorteile in Bezug auf Dichtigkeit werden darüber hinaus insbesondere bei solchen Brennstoffzellen erzielt, die für den Einsatz bei hohen Temperaturen vorgesehen sind. Die Erfindung wird vorteilhaft also bei Hochtemperatur-Brennstoffzellen angewendet. Hochtemperatur-Brennstoffzellen werden bei Temperaturen oberhalb von 600°C betrieben. 1000°C werden bei Hochtemperatur-Brennstoffzellen in der Regel nicht überschritten. Typische Temperaturen liegen zur Zeit in der Nähe von 800°C.

Als Dichtungsmaterial wird in einer Ausgestaltung der Erfindung Glaslot eingesetzt. Glaslot verträgt die Betriebsbedingungen, die in einer Hochtemperatur-Brennstoffzelle herrschen. Es verträgt ferner die thermisch bedingten Veränderungen, die bei einer Hochtemperatur-Brennstoffzelle unvermeidlich sind.

Die in der Ausnehmung einer bipolaren Platte eingesetzte Brennstoffzelle schließt vorteilhaft bündig mit der Oberfläche der bipolaren Platte ab, auf der das Dichtungsmaterial aufgebracht ist. Eine Toleranz von ca. ± 0,2 mm hat sich in der Praxis als akzeptabel herausgestellt. Befinden sich die vorgenannten Oberflächen der Brennstoffzelle bzw. der bipolaren Platte auf gleicher Höhe, so ist die gewünschte Dichtigkeit zwischen Kathodenraum und Elektrodenraum besonders zuverlässig gewährleistet. Geringfügige Abweichungen im Rahmen der vorgenannten Toleranz verschlechtern die gewünschte Wirkung nur unwesentlich.

In einer weiteren Ausgestaltung der Erfindung ist ein metallisches Netz zwischen dem Boden der Ausnehmung und der in der Ausnehmung befindlichen Brennstoffzelle vorgesehen. Durch das Netz wird einerseits der elektrische Kontakt zwischen der an das Netz angrenzenden Elektrode der Brennstoffzelle und dem Boden der bipolaren Platte sichergestellt. Darüber hinaus können durch das Netz Fertigungstoleranzen ausgeglichen werden.

Eine rechteckige oder quadratische Brennstoffzelle weist zwei Hauptoberflächen sowie vier Randseiten auf. Ein seitlicher Rand geht bei der vorgenannten Grundform rechteckig in den nächsten über. Bevorzugt werden zwei gegenüberliegende Ränder einer jeden Brennstoffzelle von bipolaren Platten eingerahmt. Die bipolaren Platten bilden dann eine Vertiefung, in die der betreffende Rand der Brennstoffzelle hineingedrückt ist. Auf einer Seite einer Hauptoberfläche der Brennstoffzelle ist der Rand dann durch das Dichtungsmaterial von der darüberliegenden bipolaren Platte getrennt. Die Brennstoffzelle ist auf diese Weise mechanisch stabil in dem Brennstoffzellenstapel eingebaut.

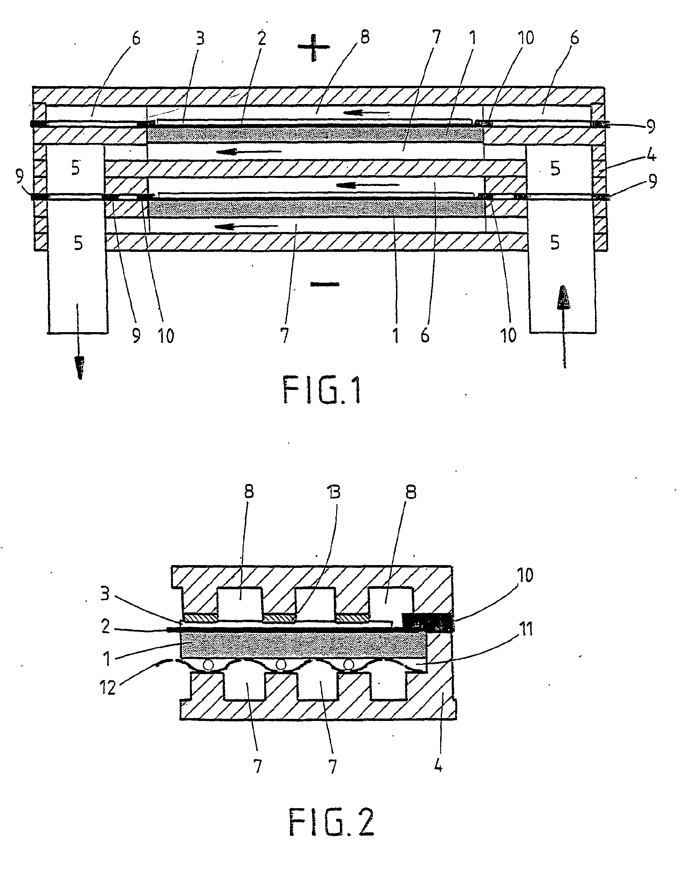

Anhand der folgenden Figuren 1 und 2 wird die Erfindung näher erläutert.

Figur 1 zeigt einen Brennstoffzellenstapel, der zwei Brennstoffzellen umfaßt. Jede Brennstoffzelle weist eine selbsttragende Anode 1 auf. Auf der selbsttragenden Elektrode 1 ist eine Elektrolytschicht 2 und darüber eine Kathode 3 aufgebracht. Bipolare Platten verbinden die beiden Brennstoffzellen elektrisch und mechanisch miteinander. Die bipolaren Platten sind mit Ausnehmungen 5 und 6 derart versehen, daß hierdurch Kanäle für die Zuleitung sowie Ableitung von Betriebsmitteln vorliegen. Die in der Figur 1 gezeigten vier Ausnehmungen 5 stammen entweder aus einer vorderen oder einer hinteren Schnittebene. Ferner sind die bipolaren Platten mit Rillen an den Seiten versehen, die an die Elektroden der Brennstoffzellen angrenzen. Durch die Rillen werden Anodenräume 7 sowie Kathodenräume 8 gebildet. Jede Brennstoffzelle ist in eine weitere Ausnehmung einer zugehörigen bipolaren Platte eingebracht. Die der Ausnehmung abgewandte Seite der Brennstoffzelle schließt im wesentlichen bündig mit der benachbarten Oberfläche der bipolaren Platte ab. Oberhalb der Brennstoffzelle sowie der bipolaren Platte befindet sich schichtförmig bzw. streifenförmig Dichtmaterial 9 und 10. Das mit der Positionsziffer 10 versehene Dichtmaterial befindet sich oberhalb der Stoßkante zwischen der bipolaren Platte 4 und der Brennstoffzelle, die in die Ausnehmung der bipolaren Platte eingebracht ist Das Dichtmaterial 10 erstreckt sich also von der entsprechenden Hauptoberfläche der Brennstoffzelle bis zur benachbarten Oberfläche der bipolaren Platte. Auf diese Weise wird erreicht, daß thermische Veränderungen entlang einer Hauptoberfläche der Brennstoffzelle sich praktisch nicht mehr zerstörerisch auf den Teil der Dichtung auswirken, die mit Positionsziffer 10 versehen ist.

Figur 2 zeigt eine vergrößerte Detailansicht von dem im Schnitt gezeigten Brennstoffzellenstapel aus Figur 1. Ferner ist der Schnitt gemäß Figur 2 um 90° gegenüber dem Schnitt aus Figur 1 gedreht.

Gemäß Figur 2 befindet sich eine Brennstoffzelle in einer Ausnehmung 11 einer bipolaren Platte 4. Zwischen dem Boden der Ausnehmung 11 und der Brennstoffzelle befindet sich ein metallisches Netz 12. Die an die andere Seite der Brennstoffzelle grenzende bipolare Platte 4 ist mit einer Kontaktschicht 13 versehen. Durch die Kontaktschicht 13 wird ein elektrischer Kontakt zwischen der bipolaren Platte und der angrenzenden Kathode 3 sichergestellt.

Die Einrahmung eines Randes einer Brennstoffzelle wird in der Figur 2 verdeutlicht. Der durch die Anode 1 gebildete Rand der Brennstoffzelle ragt in eine Vertiefung hinein, die durch die Formgebung der bipolaren Platten entstanden ist. Die Vertiefung ist eine Folge der Ausnehmung 11. In diese Vertiefung ragt der Rand der Brennstoffzelle hinein und wird eingerahmt im Sinne der Erfindung.

Die Figuren beziehen sich auf eine Ausführungsform, bei denen der Kathodenraum und der Anodenraum in gleicher Richtung durchströmt werden. Selbstverständlich ist es auch möglich, daß bei einer entsprechenden Ausgestaltung der Kathodenraum quer zur Strömungsrichtung im Anodenraum durchströmt wird.

## Patentansprüche

1. Brennstoffzellenstapel
mit einer Mehrzahl von plattenförmigen Brennstoffzellen, die mit bipolaren Platten (4) mechanisch und elektrisch verbunden sind;
jede Brennstoffzelle umfasst eine Anode (1), eine Kathode (3) und eine zwischen Kathode und Anode liegende Elektrolytschicht (2);
an jede Kathode grenzt ein Kathodenraum (8) und an jede Anode grenzt ein Anodenraum (7);
die bipolaren Platten weisen derart angeordnete Ausnehmungen auf, dass diese Kanäle (5, 6) für das Zuführen von Betriebsmitteln zu den Brennstoffzellen oder für das Abführen von abgereicherten Betriebsmitteln bilden;
jede bipolare Platte weist eine weitere Ausnehmung (11) auf, in der sich eine Brennstoffzelle befindet;
die Abmessungen der weiteren Ausnehmung sind im wesentlichen an die Abmessungen der Brennstoffzelle angepasst;
Dichtungsmaterial (10) überdeckt schicht- oder streifenförmig zumindest eine Stoßkante zwischen der Brennstoffzelle und der angrenzenden Oberfläche der bipolaren Platte, in der sich die Brennstoffzelle befindet;
das Dichtungsmaterial (10) befindet sich schichtförmig oberhalb der weiteren Ausnehmung, so dass zumindest ein Teil des Randes der in der Ausnehmung befindlichen Brennstoffzelle bedeckt wird;
darüber hinaus befindet sich das Dichtungsmaterial auf der angrenzenden Oberfläche der bipolaren Platte;
ein Randbereich einer darüber befindlichen bipolaren Platte überdeckt teilweise einen mit Dichtungsmaterial bedeckten Randbereich einer jeden Brennstoffzelle,

2. Brennstoffzellenstapel nach Anspruch 1, bei dem die Kathode und/ oder die Anode eine solche Dicke aufweist, dass die Kathode oder die Anode selbsttragend ist.

3. Brennstoffzellenstapel nach Anspruch 1 oder 2, bei dem die Anode wenigstens 0,5 mm dick ist.

4. Brennstoffzellenstapel nach einem der vorhergehenden Ansprüche, bei dem zwei Stoßkanten zwischen der Brennstoffzelle und der angrenzenden Oberfläche der bipolaren Platte, in der sich die Brennstoffzelle befindet, durch das Dichtungsmaterial überdeckt wird.

5. Brennstoffzellenstapel nach einem der vorhergehenden Ansprüche, bei dem ein wenigstens 0,1 mm breiter Streifen des schicht- oder streifenförmigen Dichtungsmaterials, welches eine Stoßkante zwischen einer Brennstoffzelle und einer bipolaren Platte überdeckt, oberhalb der Brennstoffzelle angeordnet ist.

6. Brennstoffzellenstapel nach einem der vorhergehenden Ansprüche, bei dem die Materialien so gewählt sind, dass diese bei Temperaturen oberhalb von 600 °C, bevorzugt oberhalb von 800 °C einsetzbar sind.

7. Brennstoffzellenstapel nach einem der vorhergehenden Ansprüche, bei dem als Dichtungsmaterial ein Glaslot eingesetzt ist.

8. Brennstoffzellenstapel nach einem der vorhergehenden Ansprüche, bei dem die Kathoden- und Anodenräume durch die bipolaren Platten und die Kathoden bzw. Anoden gebildet sind.

9. Brennstoffzellenstapel nach einem der vorhergehenden Ansprüche, bei dem eine Hauptoberfläche einer Brennstoffzelle bündig mit der Oberfläche der bipolaren Platte abschließt, die an die weitere Ausnehmung angrenzt.

10. Brennstoffzellenstapel nach einem der vorhergehenden Ansprüche, bei dem in wenigstens einer der weiteren Ausnehmungen ein metallisches Netz schichtförmig zwischen dem Boden der Ausnehmung und der in der Ausnehmung befindlichen Brennstoffzelle angeordnet ist.

11. Brennstoffzellenstapel nach einem der vorhergehenden Ansprüche, bei dem wenigstens zwei Ränder einer jeden Brennstoffzelle von bipolaren Platten eingerahmt sind.

## Claims

1. A fuel cell stack
with a plurality of plate-shaped fuel cells, which are connected mechanically and electrically by bipolar plates (4);
each fuel cell stack comprises an anode (1), a cathode (3) and an electrolyte layer (2) disposed between the cathode and the anode;
each cathode is adjacent to a cathode chamber (8) and each anode is adjacent to an anode chamber (7);
the bipolar plates comprise openings arranged to form channels (5, 6) for the supply of operating materials to the fuel cells or for the removal of depleted operating materials;
each bipolar plate comprises at least one further opening (11) in which a fuel cell is disposed;
the dimensions of the at least one further opening are substantially adapted to the dimensions of the fuel cell;
sealing material covers, in a layer-by-layer or strip-by-strip configuration, at least one bordering edge between the fuel cell and the adjacent surface of the bipolar plate in which the fuel cell is disposed;
the sealing material (10) is disposed layer-by-layer above the other opening, so that at least a portion of the edge of the fuel cell disposed in the opening is covered;
furthermore, the sealing material is disposed on the adjacent surface of the bipolar plate;
a portion of the edge of a bipolar plate disposed thereabove partially covers a portion of the edge of each fuel cell covered with sealing material.

2. A fuel cell stack according to claim 1, wherein the cathode and/or the anode comprises a thickness such that the cathode or the anode is self-supporting.

3. A fuel cell stack according to claim 1 or 2, wherein the anode is at least 0,5 mm thick.

4. A fuel cell stack according to any one of the preceding claims, wherein two bordering edges between the fuel cell and the adjacent surface of the bipolar plate in which the fuel cell is disposed are covered by the sealing material,

5. A fuel cell stack according to any one of the preceding claims, wherein a strip at least 0,1 mm wide of the sealing material, arranged layer-by-layer or strip-by-strip and covering the bordering edge between a fuel cell and a bipolar plate, is arranged above the fuel cell.

6. A fuel cell stack according to any one of the preceding claims, wherein the materials are selected in such a manner that they can be used at temperatures above 600°C, preferably above 800°C.

7. A fuel cell stack according to any one of the preceding claims, wherein a glass solder is used as the sealing material,

8. A fuel cell stack according to any one of the preceding claims, wherein the cathode chambers and anode chambers are formed by the bipolar plates and the cathodes and/or anodes.

9. A fuel cell stack according to any one of the preceding claims, wherein a principal surface of a fuel cell terminates flush with the surface of the bipolar plate which is adjacent to the further opening.

10. A fuel cell stack according to any one of the preceding claims, wherein a metallic mesh is arranged layer-by-layer in at least one of the at least one further openings between the base of the opening and the fuel cell disposed in the opening.

11. A fuel cell stack according to any one of the preceding claims, wherein at least two edges of each fuel cell are framed by bipolar plates.

## Revendications

1. Empilement de cellules électrochimiques
comprenant une pluralité de cellules électrochimiques sous forme de plaques qui sont reliées mécaniquement et électriquement à des plaques bipolaires (4) ;
chaque cellule électrochimique comprenant une anode (1), une cathode (3) et une couche d'électrolyte (2) disposée entre la cathode et l'anode ;
un espace de la cathode (8) étant adjacent à chaque cathode et un espace de l'anode (7) étant adjacent à chaque anode ;
les plaques bipolaires comprenant des évidements disposés de sorte que ceux-ci forment des canaux (5, 6) pour l'alimentation en combustibles aux cellules électrochimiques ou pour l'évacuation des combustibles appauvris ;
chaque plaque comprenant un autre évidement (11) dans lequel se trouve une cellule électrochimique ;
les dimensions de l'autre évidement (11) étant essentiellement adaptées aux dimensions de la cellule électrochimique ;
des matériaux d'étanchéité (10) couvrant à la manière d'une couche ou d'une bande au moins un rebord entre la cellule électrochimique et la surface adjacente de la plaque bipolaire dans laquelle se trouve la cellule électrochimique ;
les matériaux d'étanchéité (10) se trouvant sous forme d'une couche au dessus de l'autre évidement, de sorte qu'au moins une partie du bord de la cellule électrochimique qui se trouve dans l'évidement est couverte ;
les matériaux d'étanchéité se trouvant de plus sur la surface adjacente de la plaque bipolaire ;
une partie marginale d'une plaque bipolaire sus-jacente couvrant partiellement une partie marginale couverte de matériaux d'étanchéité de chaque cellule électrochimique.

2. Empilement de cellules électrochimiques selon la revendication 1, dans lequel la cathode et/ou l'anode comprend une telle épaisseur que la cathode ou l'anode est portant de soi-même.

3. Empilement de cellules électrochimiques selon la revendication 1 ou 2, dans lequel l'anode comprend une épaisseur d'au moins 0,5 mm.

4. Empilement de cellules électrochimiques selon l'une des revendications précédentes dans lequel deux rebords entre la cellule électrochimique et la surface adjacente de la plaque bipolaire, dans laquelle se trouve la cellule électrochimique, sont couverts par les matériaux d'étanchéité.

5. Empilement de cellules électrochimiques selon l'une des revendications précédentes dans lequel une bande ayant une largeur d'au moins 0,1 mm des matériaux d'étanchéité sous forme de couche ou de bande, qui couvrent un rebord entre une cellule électrochimique et une plaque bipolaire, est disposée au dessus de la cellule électrochimique.

6. Empilement de cellules électrochimiques selon l'une des revendications précédentes dans lequel les matériaux sont choisis de sorte qu'on peut les utiliser à des températures de plus de 600°C, de préférence de plus de 800°C.

7. Empilement de cellules électrochimiques selon l'une des revendications précédentes dans lequel on utilise un verre de scellement en tant que matériau d'étanchéité.

8. Empilement de cellules électrochimiques selon l'une des revendications précédentes dans lequel les espaces de la cathode et de l'anode sont formés par les plaques bipolaires et les cathodes respectivement les anodes.

9. Empilement de cellules électrochimiques selon l'une des revendications précédentes dans lequel une surface principale d'une cellule électrochimique se raccorde de manière affleurée à la surface de la plaque bipolaire qui est adjacente à l'autre évidement.

10. Empilement de cellules électrochimiques selon l'une des revendications précédentes dans lequel un réseau métallique est disposé dans au moins l'un des autres évidements sous forme de couche entre le fond de l'évidement et la cellule électrochimique qui se trouve dans l'évidement.

11. Empilement de cellules électrochimiques selon l'une des revendications précédentes dans lequel au moins deux bords de chaque cellule électrochimique sont encadrés par des plaques bipolaires.
